# EUROPEAN PATENT APPLICATION

(11) **EP 4 645 770 A1**
(43) Date of publication of application: **05.11.2025**
(21) Application number: 22969494.8
(22) Date of filing: 26.12.2022
(51) Int. Cl.: H04L 27/00, G01S 19/42, G01S 19/37

(54) **METHOD FOR DETERMINING GLOBAL NAVIGATION SATELLITE SYSTEM (GNSS) MEASUREMENT CAPABILITY, AND APPARATUS**

(71) Applicant: Beijing Xiaomi Mobile Software Co., Ltd., Beijing 100085 (CN)
(72) Inventor: ZHU, Yajun, Beijing 100085 (CN)
(74) Representative: Stöckeler, Ferdinand
(86) International application number: PCT/CN2022/142079
(87) International publication number: WO 2024/138337

(57) **Abstract**

Disclosed in the embodiments of the present application are a method and apparatus for determining a GNSS measurement capability. The method comprises: a terminal device directly sending to a network device a GNSS measurement capability comprising whether the terminal device supports simultaneous operation of a wireless cellular network system and GNSS measurement, or the length of time required to obtain a GNSS measurement result, such that the network device can effectively execute an appropriate operation in a timely manner according to the GNSS measurement capability of the terminal device, thereby ensuring that the terminal device can acquire its own location information in a timely manner, and as such effectively reducing a transmission delay and saving on the power consumption of the terminal device; meanwhile, more accurate uplink synchronization compensation information can be acquired, thereby avoiding interference with regard to uplink transmission between different terminal devices.

## Description

### TECHNICAL FIELD

The disclosure relates to the field of communication technology, and in particular to a method and an apparatus for determining a global navigation satellite system (GNSS) measurement capability.

### BACKGROUND

In satellite communication scenarios, a terminal needs to obtain its location information in order to perform uplink synchronization compensation. When transmitting services with long transmission durations, if global navigation satellite system (GNSS) information expires, the terminal needs to re-acquire the GNSS information. In the related art, when obtaining the GNSS information, the terminal enters into an idle state, leading to increased transmission latency and power consumption.

### SUMMARY

Embodiments of the disclosure provide a method and an apparatus for determining a global navigation satellite system (GNSS) measurement capability.

In a first aspect, embodiments of the disclosure provide a method for determining a GNSS measurement capability, performed by a terminal. The method includes: sending a GNSS measurement capability of the terminal to a network device, in which the GNSS measurement capability includes at least one of: whether the terminal supports a wireless cellular network system to operate simultaneously with a GNSS measurement, or a length of time required to obtain a GNSS measurement result.

In the disclosure, the terminal sends directly, to the network device, the GNSS measurement capability of the terminal on whether the terminal supports the wireless cellular network system to operate simultaneously with the GNSS measurement or the length of time required to obtain the GNSS measurement result. This enables the network device to timely and effectively perform appropriate operations based on the GNSS measurement capability of the terminal, such that it ensures that the terminal may promptly obtain its location information; thereby effectively reducing transmission delays and minimizing power consumption of the terminal. At the same time, more accurate uplink synchronization compensation information is obtained; and interference on uplink transmissions between different terminals is prevented.

In a second aspect, embodiments of the disclosure provide a method for determining a GNSS measurement capability, performed by a network device. The method includes: receiving a GNSS measurement capability from a terminal, in which the GNSS measurement capability includes at least one of: whether the terminal supports a wireless cellular network system to operate simultaneously with a GNSS measurement or a length of time required to obtain a GNSS measurement result.

In a third aspect, embodiments of the disclosure provide a terminal. The terminal includes: a transceiver module, configured to send a GNSS measurement capability of the terminal to a network device, in which the GNSS measurement capability includes at least one of: whether the terminal supports a wireless cellular network system to operate simultaneously with a GNSS measurement or a length of time required to obtain a GNSS measurement result.

In a fourth aspect, embodiments of the disclosure provide a network device. The network device includes: a transceiver module, configured to receive a GNSS measurement capability from a terminal, in which the GNSS measurement capability includes at least one of: whether the terminal supports a wireless cellular network system to operate simultaneously with a GNSS measurement or a length of time required to obtain a GNSS measurement result.

In a fifth aspect, embodiments of the disclosure provide a communication device. The communication device includes: a processor and a memory, in which the memory stores a computer program, which, when executed by the processor, cause the device to implement the method for determining a GNSS measurement capability according to the first aspect.

In a sixth aspect, embodiments of the disclosure provide a communication device. The communication device includes: a processor and a memory, in which the memory stores a computer program, which, when executed by the processor, cause the device to implement the method for determining a GNSS measurement capability according to the second aspect.

In a seventh aspect, embodiments of the disclosure provide a communication device. The communication device includes: a processor and an interface circuit; in which the interface circuit is configured to receive code instructions and transmit the code instructions to the processor; and the processor is configured to execute the code instructions to cause the device to implement the method for determining a GNSS measurement capability according to the first aspect.

In an eighth aspect, embodiments of the disclosure provide a communication device. The communication device includes: a processor and an interface circuit; in which the interface circuit is configured to receive code instructions and transmit the code instructions to the processor; and the processor is configured to execute the code instructions to cause the device to implement the method for determining a GNSS measurement capability according to the second aspect.

In a ninth aspect, embodiments of the disclosure provide a communication system. The system includes the terminal according to the third aspect and the network device according to the fourth aspect, or the system includes the communication device according to the fifth aspect and the communication device according to the sixth aspect, or the system includes the communication device according to the seventh aspect and the communication device according to the eighth aspect, or the system includes the communication device according to the ninth aspect and the communication device according to the tenth aspect.

In a tenth aspect, embodiments of the disclosure provide a computer-readable storage medium, configured to store instructions, in which when the instructions are executed, the method for determining a GNSS measurement capability according to the first aspect is implemented.

In an eleventh aspect, embodiments of the disclosure provide a computer-readable storage medium, configured to store instructions, in which when the instructions are executed, the method for determining a GNSS measurement capability according to the second aspect is implemented.

In a twelfth aspect, embodiments of the disclosure provide a computer program product. When the computer program product is running on a computer, the computer is caused to perform the method according to the first aspect.

In a thirteenth aspect, embodiments of the disclosure provide a computer program product. When the computer program product is running on a computer, the computer is caused to perform the method for determining a GNSS measurement capability according to the second aspect.

In a fourteenth aspect, embodiments of the disclosure provide a chip system. The chip system includes at least one processor and an interface, and is configured to support a terminal to perform functions involved in the first aspect, for example, to determine or process at least one of data or information involved in the above methods. In a possible design, the chip system further includes a memory. The memory is configured to store necessary computer programs and data for the terminal. The chip system may be consisted of chips or may include chips and other discrete devices.

In a fifteenth aspect, embodiments of the disclosure provide a chip system. The chip system includes at least one processor and an interface, and is configured to support a network device to perform functions involved in the second aspect, for example, to determine or process at least one of data or information involved in the above methods. In a possible design, the chip system further includes a memory. The memory is configured to store necessary computer programs and data for the terminal. The chip system may be consisted of chips or may include chips and other discrete devices.

In a sixteenth aspect, embodiments of the disclosure provide a computer program. When the computer program is running on a computer, the computer is caused to perform the method according to the first aspect.

In a seventeenth aspect, embodiments of the disclosure provide a computer program. When the computer program is running on a computer, the computer is caused to perform the method according to the second aspect.

Embodiments of the disclosure provide methods and apparatuses for determining a GNSS measurement capability. The terminal sends directly, to the network device, the GNSS measurement capability of the terminal on whether the terminal supports the wireless cellular network system to operate simultaneously with a GNSS measurement or the length of time required to obtain the GNSS measurement result. This enables the network device to timely and effectively perform appropriate operations based on the GNSS measurement capability of the terminal, such that it ensures that the terminal may promptly obtain its location information; thereby effectively reducing transmission delays and minimizing power consumption of the terminal. At the same time, more accurate uplink synchronization compensation information is obtained and interference on uplink transmissions between different terminals is prevented.

Additional aspects and advantages of the disclosure will be set forth in part in the description which follows, and in part will be obvious from the description, or will be learned by practice of the disclosure.

### BRIEF DESCRIPTION OF THE DRAWINGS

In order to explain technical solutions in the embodiments of the disclosure or the related art more clearly, the drawings described in the embodiments of the disclosure or required in the related art will be briefly introduced below.
FIG. 1 is a diagram illustrating an architecture of a communication system according to an embodiment of the disclosure.
FIG. 2 is a flow chart illustrating a method for determining a global navigation satellite system (GNSS) measurement capability according to an embodiment of the disclosure.
FIG. 3 is a flow chart illustrating a method for determining a GNSS measurement capability according to an embodiment of the disclosure.
FIG. 4 is a flow chart illustrating a method for determining a GNSS measurement capability according to an embodiment of the disclosure.
FIG. 5 is a flow chart illustrating a method for determining a GNSS measurement capability according to an embodiment of the disclosure.
FIG. 6 is a flow chart illustrating a method for determining a GNSS measurement capability according to an embodiment of the disclosure.
FIG. 7 is a flow chart illustrating a method for determining a GNSS measurement capability according to an embodiment of the disclosure.
FIG. 8 is a block diagram illustrating a communication device according to an embodiment of the disclosure.
FIG. 9 is a block diagram illustrating a communication device according to an embodiment of the disclosure.
FIG. 10 is a block diagram illustrating a chip according to an embodiment of the disclosure.

### DETAILED DESCRIPTION

Reference will now be made in detail to the exemplary embodiments, examples of which are illustrated in the accompanying figures. When the following description refers to the accompanying figures, the same numerals in different figures refer to the same or similar elements, unless otherwise indicated. The implementations described in the following exemplary embodiments do not represent all implementations consistent with the embodiments of the disclosure. Rather, they are merely examples of devices and methods consistent with some aspects of the embodiments of the disclosure as recited in the appended claims.

Terms used in the embodiments of the disclosure are for the purpose of describing specific embodiments only, and are not intended to limit the embodiments of the disclosure. As used in the embodiments of the disclosure and the appended claims, the singular forms "a/an", "said" and "the" are also intended to include the plural forms, unless the context clearly dictates otherwise. It should also be understood that the term "and/or" as used herein refers to and includes any and all possible combinations of one or more of the associated listed items.

It should be understood that although the embodiments of the disclosure may use the terms first, second, third, etc. to describe various information, the information should not be limited to these terms. These terms are only used to distinguish information of the same type from one another. For example, without departing from the scope of the embodiments of the disclosure, first information may also be called second information, and similarly, second information may also be called first information. Depending on the context, the word "if" and "in case" as used herein may be interpreted as "in a case that" or "when" or "in response to a determination".

Embodiments of the disclosure are described in detail below, and examples of the embodiments are illustrated in the accompanying figures, in which the same or similar symbols from beginning to end indicate the same or similar elements. The embodiments described below by reference to the accompanying figures are exemplary and are intended to be used to explain the disclosure and are not to be construed as a limitation of the disclosure.

In order to better understand methods for determining a global navigation satellite system (GNSS) measurement capability in embodiments of the disclosure, a communication system to which embodiments of the disclosure are applicable is described below.

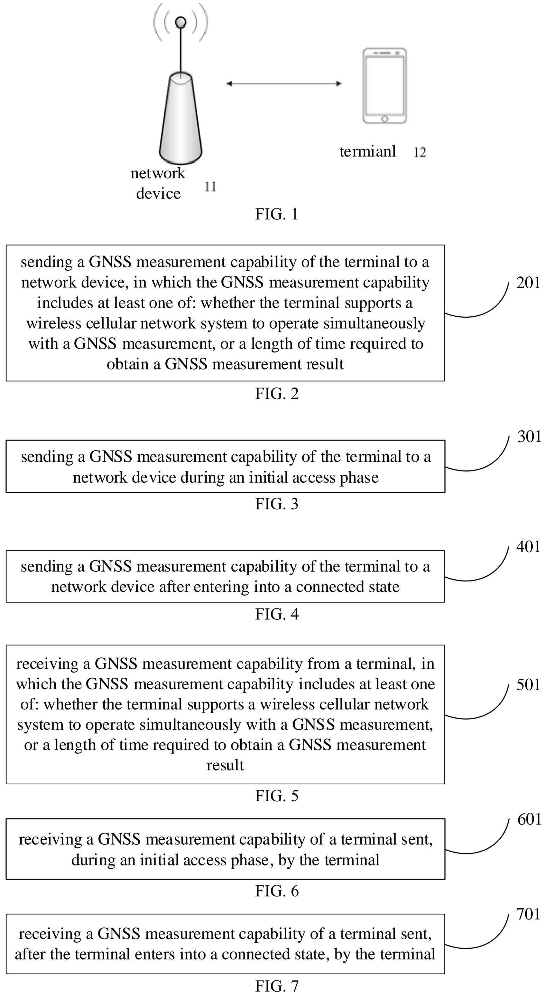

FIG. 1 is a diagram illustrating an architecture of a communication system according to an embodiment of the disclosure. The communication system may include, but is not limited to, one network device and one terminal. The number and forms of the devices illustrated in FIG. 1 are only for example and do not constitute a limitation to embodiments of the disclosure, and two or more network devices and two or more terminals may be included in practical applications. The communication system as illustrated in FIG. 1 includes one network device 11 and one terminal 12 for example.

It should to be noted that the technical solution in embodiments of the disclosure is applicable to various communication systems, for example, a long term evolution (LTE) system, a 5th generation (5G) mobile communication system, a 5G new radio (NR) system or other future new mobile communication systems.

The network device 101 in embodiments of the disclosure is an entity, at a network side, for transmitting or receiving a signal. For example, the network device 11 may be an evolved NodeB (eNB), a transmission reception point (TRP), a next generation NodeB (gNB) in a NR system, a base station in other future mobile communication systems, or an access node in a wireless fidelity (WiFi) system. A specific technology and a specific device form adopted by the network device are not limited in embodiments of the disclosure. The network device according to embodiments of the disclosure may consist of a central unit (CU) and a distributed unit (DU). The CU may also be referred to as a control unit. The protocol layers of a network device such as a base station may be split by using a structure of the CU-DU, so that the functions for a part of the protocol layers are placed in the CU for centralized control, and functions of a remaining part or all of the protocol layers are distributed in the DU, and the DU is centrally controlled by the CU.

The terminal 12 in embodiments of the disclosure is an entity, at a user side, for receiving or transmitting a signal, for example, a mobile phone. The terminal may be referred to as a terminal, a user equipment (UE), a mobile station (MS), a mobile terminal (MT), etc. The terminal may be a machine with a communication function, such as a vehicle, a smart vehicle, a mobile phone, an Internet of Things device, a wearable device, a tablet computer (Pad), a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in transportation safety, a wireless terminal in a smart home, etc. A specific technology adopted by the terminal and a specific device form adopted by the terminal are not limited in embodiments of the disclosure.

In the disclosure, the terminal 12 may be configured to implement the method illustrated in any of the embodiments of FIG. 2 to FIG. 4, and the network device 11 may be configured to implement the method as illustrated in any of the embodiments of FIG. 5 to FIG. 7.

With the continuous development of wireless communication technologies, satellite communication is considered as a crucial aspect in the evolution of future wireless communication systems. In satellite communication scenarios, the extended signal transmission distance between a transmitter and a receiver results in significant data transmission latency. For a transmission involving uplink-downlink relationship, current standardization discussions have determined to introduce an offset parameter Koffset to compensate for the transmission delay.

The terminal may compensate for the transmission latency using associated information of ephemeris information and common timing advance (TA). The ephemeris information and the common TA are notified to the terminal through system information.

In a satellite communication scenario, the terminal needs to obtain its location information to perform uplink synchronization compensation. In transmitting a service of which a transmission time is long, if global navigation satellite system (GNSS) information expires, the terminal needs to re-acquire the GNSS information.

For certain terminals (e.g., internet of things (IoT) terminals), they do not support a wireless cellular network module and a GNSS module to work simultaneously. The related art only supports sporadic transmission for the wireless cellular network and the GNSS measurement. The terminal may enter into an idle state when obtaining the GNSS information, leading to increased transmission delay and increased power consumption. Different terminals may have different GNSS measurement capabilities, and the network device may perform appropriate operations based on the GNSS measurement capabilities of the terminals. Therefore, the disclosure provides methods for determining a GNSS measurement capability. The terminal reports its GNSS measurement capability to the network device. This enables the network device to timely and promptly determine the GNSS measurement capability of the terminal, and then perform an appropriate operation to avoid the power consumption of the terminal.

It may be understood that the communication system described in embodiments of the disclosure is intended to explain technical solutions of embodiments of the disclosure more clearly, and does not constitute a limitation to the technical solutions according to embodiments of the disclosure. Those skilled in the art know that, with evolution of a system architecture and emergence of a new business scenario, the technical solutions according to embodiments of the disclosure are also applied to similar technical problems.

Methods and apparatuses for determining a GNSS measurement capability in the disclosure are further described in combination with attached figures.

FIG. 2 is a flow chart illustrating a method for determining a GNSS measurement capability according to an embodiment of the disclosure. It should be noted that the method for determining a GNSS measurement capability in embodiments of the disclosure is performed by a terminal. The method may be performed independently or may be performed in conjunction with any other embodiments of the disclosure. As shown in FIG. 2, the method may include the following.

At block 201, a GNSS measurement capability of the terminal is sent to the network device, in which the GNSS measurement capability includes at least one of: whether the terminal supports a wireless cellular network system to operate simultaneously with a GNSS measurement or a length of time required to obtain a GNSS measurement result.

In the disclosure, "the length of time required to obtain a GNSS measurement result" refers to the length of time required by the terminal to obtain the GNSS measurement result. In performing the GNSS measurement, the wireless cellular of the terminal may be in a connected state or in a disconnected state.

In some implementations, the terminal supports the wireless cellular network system to operate simultaneously with the GNSS measurement. That is, while performing a GNSS positioning measurement, the terminal may maintain the wireless communication connection with the network device. Or further, while performing the GNSS positioning measurement, the terminal may maintain data interaction with the network device without entering into an IDLE state.

In some implementations, the terminal does not support the wireless cellular network system to operate simultaneously with the GNSS measurement. That is, while performing the GNSS positioning measurement, the terminal cannot maintain the wireless communication interaction with the network device and the terminal needs to enter into the IDLE state.

In some implementations, the terminal supports the wireless cellular network system to operate simultaneously with the GNSS measurement, and the length of time required by the terminal to obtain the GNSS measurement result of the terminal may differ from the length of time required by another terminal. Therefore, the terminal may send the length of time required to obtain the GNSS measurement result to the network device. Then, the network device may perform an appropriate operation based on the length of time required to obtain the GNSS measurement result, for example selecting an appropriate timing used for sending a control command/instruction to the terminal.

In some implementations, the terminal does not support the wireless cellular network system to operate simultaneously with the GNSS measurement, and the length of time required by the terminal to obtain the GNSS measurement result may differ from the length of time required by another terminal. Thus, the terminal may also send the length of time required to obtain the GNSS measurement result to the network device. Then, the network device may perform an appropriate operation based on the length of time required to obtain the GNSS measurement result, for example selecting an appropriate timing used for sending a control command/instruction to the terminal.

In some embodiments, the terminal may indicate its GNSS measurement capability to the network device in an explicit manner or the terminal may indicate its GNSS measurement capability to the network device in an implicit manner.

In some embodiments, the terminal may send first indication information to the network device to indicate its GNSS measurement capability. The first indication information includes an information field for indicating the GNSS measurement capability of the terminal. For example, a value of the information field being "0" indicates that the terminal does not support the wireless cellular network system to operate simultaneously with the GNSS measurement, while the value being "1" indicates that the terminal supports the wireless cellular network system to operate simultaneously with the GNSS measurement.

Further, in a case that different terminals require different lengths of time to obtain the GNSS measurement result (e.g., the length of time required by some terminals to obtain the GNSS measurement result is "t1", while the length of time required by other terminals to obtain the GNSS measurement result is "t2"), the information field of the first indication information may use two bits to indicate the GNSS measurement capability of the terminal.

For example, a value of the information field being "00" indicates that the terminal does not support the wireless cellular network system to operate simultaneously with the GNSS measurement. The value of the information field being "01" indicates that the terminal supports the wireless cellular network system to operate simultaneously with the GNSS measurement, but the terminal only supports maintaining the connection of the wireless cellular network when performing the GNSS measurement. That is, the terminal does not expect to receive any control command/instruction from the network device when performing the GNSS measurement. The value of the information field being "10" indicates that the terminal supports the wireless cellular network system to operate simultaneously with the GNSS measurement and the GNSS measurement capability of the terminal is a first type of capability. The value of the information field being "11" indicates that the terminal supports the wireless cellular network system to operate simultaneously with the GNSS measurement and the GNSS measurement capability of the terminal is a second type of capability. In some possible implementations, different types of GNSS measurement capabilities may include not only different lengths of time required to obtain the GNSS measurement result but also different validity durations of the GNSS measurement result, which is not limited in the disclosure.

In some embodiments, the terminal may implicitly send the GNSS measurement capability to the network device, by reporting GNSS measurement assistance information of the terminal.

The GNSS measurement assistance information may include at least one of: the length of time required to obtain the GNSS measurement result, or the validity duration of the GNSS measurement result.

The terminal may implicitly indicate whether the terminal supports the wireless cellular network system to operate simultaneously with the GNSS measurement, by setting any item in the GNSS measurement assistance information as a specified value.

For example, in a case that the terminal does not support the wireless cellular network system to operate simultaneously with the GNSS measurement, the terminal may set the "length of time required to obtain the GNSS measurement result" as a specified value (e.g., infinite) to indicate, to the network device, that the terminal does not support the wireless cellular network system to operate simultaneously with the GNSS measurement.

In some possible implementations, in the case that the terminal does not support the wireless cellular network system to operate simultaneously with the GNSS measurement, when the terminal is in the connected state, the terminal does not expect to receive, from the network device, any command/instruction for performing the GNSS measurement. Consequently, the terminal stops monitoring the command/instruction, sent by the network device, for triggering to perform the GNSS measurement, when the terminal is in the connected state. When the GNSS measurement result expires (e.g., when a GNSS validity timer expires), the terminal enters into an IDLE state to perform the GNSS measurement.

In some possible implementations, in the case that the terminal supports the wireless cellular network system to operate simultaneously with the GNSS measurement, the terminal may perform the GNSS measurement in the connected state, based on a trigger or a configuration.

That is, the terminal may perform the GNSS measurement in the connected state based on the trigger from the network device; perform the GNSS measurement periodically based on a configured GNSS measurement period; or perform the GNSS measurement based on a configured GNSS measurement window. The above is not limited in the disclosure.

In summary, the terminal sends directly, to the network device, the GNSS measurement capability of the terminal on whether the terminal supports the wireless cellular network system to operate simultaneously with the GNSS measurement or the length of time required to obtain the GNSS measurement result. This enables the network device to timely and effectively perform appropriate operations based on the GNSS measurement capability of the terminal, such that it ensures that the terminal promptly obtains its location information; thereby effectively reducing transmission delays and minimizing power consumption of the terminal. At the same time, more accurate uplink synchronization compensation information is obtained and interference on uplink transmissions between different terminals is prevented.

FIG. 3 is a flow chart illustrating a method for determining a GNSS measurement capability according to an embodiment of the disclosure. It should be noted that the method for determining a GNSS measurement capability in embodiments of the disclosure is performed by a terminal. The method may be performed independently or may be performed in conjunction with any other embodiments of the disclosure. As shown in FIG. 3, the method may include the following.

At block 301, a GNSS measurement capability of the terminal is sent to a network device during an initial access phase.

The GNSS measurement capability includes at least one of: whether the terminal supports a wireless cellular network system to operate simultaneously with a GNSS measurement, or a length of time required to obtain a GNSS measurement result.

In the disclosure, "the length of time required to obtain a GNSS measurement result" refers to the length of time required by the terminal to obtain the GNSS measurement result. When performing the GNSS measurement, the wireless cellular of the terminal may be in a connected state or in a disconnected state.

That is, the terminal may send its GNSS measurement capability to the network device when the terminal first connects to the wireless cellular network system, so that the network device may perform an appropriate operation based on the GNSS measurement capability of the terminal.

In some possible implementations, the terminal may send a preamble sequence corresponding to the GNSS measurement capability of the terminal to the network device during the initial access phase.

In some embodiments, the terminal may determine a mapping relationship between GNSS measurement capabilities and preamble sequences based on a protocol agreement, and then select and send the preamble sequence corresponding to the GNSS measurement capability of the terminal to the network device during the initial access phase.

In some embodiments, the terminal may determine a mapping relationship between GNSS measurement capabilities and preamble sequences based on first information sent by the network device, and then select and send the preamble sequence corresponding to the GNSS measurement capability of the terminal to the network device during the initial access phase. The first information may be system information or any other information, which is not limited in this disclosure.

In some possible implementations, the terminal may send, to the network device during the initial access phase, a preamble sequence using a resource position corresponding to the GNSS measurement capability.

That is, different positions of preamble sequence transmission resources correspond to different GNSS measurement capabilities. Thus, the terminal may select, during the initial access phase, a resource position corresponding to the GNSS measurement capability of the terminal to send the preamble sequence, and the network device may determine the GNSS measurement capability of the terminal based on the position of the resource on which the preamble sequence is received.

In some embodiments, the terminal may determine a mapping relationship between GNSS measurement capabilities and resource positions based on a protocol agreement, and then select a resource position corresponding to the GNSS measurement capability of the terminal to send the preamble sequence to the network device during the initial access phase.

In some embodiments, the terminal may determine a mapping relationship between GNSS measurement capabilities and resource positions based on second information sent by the network device, and then select a resource position corresponding to the GNSS measurement capability of the terminal to send the preamble sequence to the network device during the initial access phase. The second information may be system information or any other information, which is not limited in this disclosure.

In some possible implementations, the terminal may send the GNSS measurement capability to the network device via a third access message.

In some embodiments, the terminal may carry first indication information for indicating the GNSS measurement capability in the third access message; or the terminal may carry GNSS measurement assistance information in the third access message to implicitly indicate the GNSS measurement capability of the terminal.

For specific implementations of the first indication information and the GNSS measurement assistance information reference may be made to the detailed descriptions in any embodiment of the disclosure, and details are not repeated herein.

In some possible implementations, in the case that the terminal does not support the wireless cellular network system to operate simultaneously with the GNSS measurement, the terminal does not expect to receive, from the network device, any command/instruction for performing the GNSS measurement, when the terminal is in the connected state. Consequently, the terminal stops monitoring the command/instruction, sent by the network device, for triggering to perform the GNSS measurement, when the terminal is in the connected state. When the GNSS measurement result expires (e.g., when a GNSS validity timer expires), the terminal enters into an IDLE state to perform the GNSS measurement.

In some implementations, in the case that the terminal supports the wireless cellular network system to operate simultaneously with the GNSS measurement, the terminal performs the GNSS measurement in the connected state, based on a trigger or a configuration.

That is, the terminal may perform the GNSS measurement in the connected state based on the trigger from the network device; perform the GNSS measurement periodically based on a configured GNSS measurement period; or perform the GNSS measurement based on a configured GNSS measurement window. The above is not limited in the disclosure.

In summary, the terminal sends its GNSS measurement capability to the network device during the initial access phase. This enables the network device to timely and effectively perform appropriate operations based on the GNSS measurement capability of the terminal, such that it ensures that the terminal may promptly obtain its location information; thereby effectively reducing transmission delays and minimizing power consumption of the terminal. At the same time, more accurate uplink synchronization compensation information is obtained and interference on uplink transmissions between different terminals is prevented.

FIG. 4 is a flow chart illustrating a method for determining a GNSS measurement capability according to an embodiment of the disclosure. It should be noted that the method for determining a GNSS measurement capability in embodiments of the disclosure is performed by a terminal. The method may be performed independently or may be performed in conjunction with any other embodiments of the disclosure. As shown in FIG. 4, the method may include the following.

At block 401, a GNSS measurement capability of the terminal is sent to a network device after entering into a connection state.

The GNSS measurement capability includes at least one of: whether the terminal supports a wireless cellular network system to operate simultaneously with a GNSS measurement or a length of time required to obtain a GNSS measurement result.

In the disclosure, "the length of time required to obtain a GNSS measurement result" refers to the length of time required by the terminal to obtain the GNSS measurement result. When performing the GNSS measurement, the wireless cellular of the terminal may be in a connected state or in a disconnected state.

In some possible implementations, the terminal may send first indication information to the network device after entering into the connected state to explicitly indicate the GNSS measurement capability of the terminal.

For the implementation of the first indication information reference may be made to the detailed descriptions in any embodiment of this disclosure, and details are not repeated herein.

In some possible implementations, the terminal may send the GNSS measurement assistance information to the network device after entering into the connected state to implicitly indicate the GNSS measurement capability of the terminal. For the specific manner in which the terminal indicates the GNSS measurement capability of the terminal via the GNSS measurement assistance information reference may be made to the detailed descriptions in any embodiment of this disclosure, and details are not repeated herein.

In some possible implementations, the terminal may send the GNSS measurement capability to the network device based on a GNSS measurement period.

That is, the terminal may report its GNSS measurement capability to the network device once before each GNSS measurement window arrives or after each GNSS measurement is completed. It should be noted that the GNSS measurement capability of the terminal may be fixed or variable, which is not limited in this disclosure.

In some embodiments, the terminal may send the GNSS measurement capability to the network device based on a trigger command/instruction from the network device.

That is, after entering into the connected state, the terminal may send its GNSS measurement capability to the network device after receiving the trigger command/instruction from the network device.

In some possible implementations, in the case that the terminal does not support the wireless cellular network system to operate simultaneously with the GNSS measurement, when the terminal is in the connected state, the terminal does not expect to receive, from the network device, any command/instruction for performing the GNSS measurement. Consequently, when the terminal is in the connected state, the terminal stops monitoring the command/instruction, sent by the network device, for triggering to perform the GNSS measurement. When the GNSS measurement result expires (e.g., when a GNSS validity timer expires), the terminal enters into an IDLE state to perform the GNSS measurement.

In some implementations, in the case that the terminal supports the wireless cellular network system to operate simultaneously with the GNSS measurement, the terminal may perform the GNSS measurement in the connected state, based on a trigger or a configuration.

That is, the terminal may perform the GNSS measurement in the connected state based on the trigger from the network device; perform the GNSS measurement periodically based on a configured GNSS measurement period; or perform the GNSS measurement based on a configured GNSS measurement window. The above is not limited in the disclosure.

In summary, the terminal sends the GNSS measurement capability of the terminal to the network device after entering into the connected state. This enables the network device to timely and effectively perform appropriate operations based on the GNSS measurement capability of the terminal, such that it ensures that the terminal may promptly obtain its location information; thereby effectively reducing transmission delays and minimizing power consumption of the terminal. At the same time, more accurate uplink synchronization compensation information is obtained and interference between uplink transmissions from different terminals is prevented.

FIG. 5 is a flow chart illustrating a method for determining a GNSS measurement capability according to an embodiment of the disclosure. It should be noted that the method for determining a GNSS measurement capability in embodiments of the disclosure is performed by a network device. The method may be performed independently or may be performed in conjunction with any other embodiments of the disclosure. As shown in FIG. 5, the method may include the following.

At block 501, a GNSS measurement capability from a terminal is received, in which the GNSS measurement capability includes at least one of: whether the terminal supports a wireless cellular network system to operate simultaneously with a GNSS measurement, or a length of time required to obtain a GNSS measurement result.

In the disclosure, "the length of time required to obtain a GNSS measurement result" refers to the length of time required by the terminal to obtain the GNSS measurement result. In performing the GNSS measurement, a wireless cellular of the terminal may be in a connected state or in a disconnected state.

In some implementations, the terminal supports the wireless cellular network system to operate simultaneously with the GNSS measurement. That is, while performing a GNSS positioning measurement, the terminal may maintain the wireless communication connection with the network device. Or further, while performing a GNSS positioning measurement, the terminal may maintain data interaction with the network device without entering into an IDLE state.

In some implementations, the terminal does not support the wireless cellular network system to operate simultaneously with the GNSS measurement. That is, while performing the GNSS positioning measurement, the terminal cannot maintain the wireless communication interaction with the network device and the terminal needs to enter into the IDLE state.

In some implementations, for each terminal that supports the wireless cellular network system to operate simultaneously with the GNSS measurement, the respective length of time required to obtain the GNSS measurement result may be different. Thus, the network device may receive, from the terminal, the length of time required by the terminal to obtain the GNSS measurement result. Subsequently, the network device may perform appropriate operations based on the received length of time required to obtain the GNSS measurement result, such as selecting an appropriate timing for sending a control command/instruction to the terminal.

In some implementations, for each terminal that does not support the wireless cellular network system to operate simultaneously with the GNSS measurement, the respective length of time required to obtain the GNSS measurement result may be different. Thus, the network device may also receive, from the terminal, the length of time required by the terminal for obtaining the GNSS measurement result. Afterwards, the network device may perform, based on the received length of time required for obtaining the GNSS measurement result, an appropriate operation, such as selecting a timing for sending a control command/instruction to the terminal, or the like.

In some embodiments, the GNSS measurement capability received by the network device from the terminal may be indicated by the terminal in an explicit manner or in an implicit manner.

In some embodiments, the network device may receive first indication information sent by the terminal, the first indication information being configured to indicate the GNSS measurement capability of the terminal. The first indication information includes an information field for indicating the GNSS measurement capability of the terminal. For example, a value of the information field being "0" indicates that the terminal does not support the wireless cellular network system to operate simultaneously with the GNSS measurement, while the value being "1" indicates that the terminal supports the wireless cellular network system to operate simultaneously with the GNSS measurement.

Further, in a case that different terminals require different lengths of time to obtain the GNSS measurement result (e.g., the length of time required by some terminals to obtain the GNSS measurement result is "t1", while the length of time required by other terminals is "t2"), the information field of the first indication information may use two bits to indicate the GNSS measurement capability of the terminal.

For example, a value of the information field being "00" indicates that the terminal does not support the wireless cellular network system to operate simultaneously with the GNSS measurement. The value of the information field being "01" indicates that the terminal supports the wireless cellular network system to operate simultaneously with the GNSS measurement, but the terminal only supports maintaining the wireless cellular network connection when performing the GNSS measurement. That is, the terminal does not expect to receive any control command/instruction from the network device when performing the GNSS measurement. The value of the information field being "10" indicates that the terminal supports the wireless cellular network system to operate simultaneously with the GNSS measurement and the GNSS measurement capability of the terminal is a first type of capability. The value of the information field being "11" indicates that the terminal supports the wireless cellular network system to operate simultaneously with the GNSS measurement and the GNSS measurement capability of the terminal is a second type of capability.

In some possible implementations, different types of GNSS measurement capabilities may include not only different lengths of time required to obtain the GNSS measurement result but also different validity durations of the GNSS measurement result, which is not limited in the disclosure.

In some embodiments, the network device may also receive GNSS measurement assistance information of the terminal from the terminal, the GNSS measurement assistance information being configured to indicate the GNSS measurement capability of the terminal.

The GNSS measurement assistance information may include at least one of: the length of time required to obtain the GNSS measurement result, or the validity duration of the GNSS measurement result.

After receiving the GNSS measurement auxiliary information sent by the terminal, the network device may deduce and determine the GNSS measurement capability of the terminal based on a value of the GNSS measurement auxiliary information. For example, in a case that the length of time required to obtain the GNSS measurement result in the GNSS measurement assistance information of the terminal is a specified value, it is determined that the terminal does not support the wireless cellular network system to operate simultaneously with the GNSS measurement.

For example, in a case that the terminal does not support the wireless cellular network system to operate simultaneously with the GNSS measurement, the terminal may set the "length of time required to obtain the GNSS measurement result" as a specified value (e.g., infinite). Thus, after the network device receives the "length of time required to obtain the GNSS measurement result" sent by the terminal, if the value of the length is infinite, then it may be determined that the terminal does not support the wireless cellular network system to operate simultaneously with the GNSS measurement.

In some possible implementations, in the case that the terminal does not support the wireless cellular network system to operate simultaneously with the GNSS measurement, when the terminal is in the connected state, the terminal does not expect to receive, from the network device, any command/instruction for performing the GNSS measurement,. Consequently, the network device may stop sending, to the terminal, a command/instruction for triggering to perform the GNSS measurement, when the terminal is in the connected state.

In some possible implementations, in the case that the terminal supports the wireless cellular network system to operate simultaneously with the GNSS measurement, the network device may send, to the terminal, a trigger command/instruction for triggering the terminal in the connected state to perform the GNSS measurement, when the terminal is in the connected state.

In summary, the network device receives, from the terminal, the GNSS measurement capability on whether the terminal supports a wireless cellular network system to operate simultaneously with a GNSS measurement or a length of time required to obtain a GNSS measurement result. This enables the network device to timely and effectively perform appropriate operations based on the GNSS measurement capability of the terminal, such that it may ensure that the terminal promptly obtains its location information; thereby effectively reducing transmission delays and minimizing power consumption of the terminal. At the same time, more accurate uplink synchronization compensation information is obtained and interference on uplink transmissions between different terminals is prevented.

FIG. 6 is a flow chart illustrating a method for determining a GNSS measurement capability according to an embodiment of the disclosure. It should be noted that the method for determining a GNSS measurement capability in embodiments of the disclosure is performed by a network device. The method may be performed independently or may be performed in conjunction with any other embodiments of the disclosure. As shown in FIG. 6, the method may include the following.

At block 601, a GNSS measurement capability of a terminal sent by the terminal during an initial access phase is received.

The GNSS measurement capability includes at least one of: whether the terminal supports a wireless cellular network system to operate simultaneously with a GNSS measurement, or a length of time required to obtain a GNSS measurement result.

In the disclosure, "the length of time required to obtain a GNSS measurement result" refers to the length of time required by the terminal to obtain the GNSS measurement result. In performing the GNSS measurement, the wireless cellular of the terminal may be in a connected state or in a disconnected state.

That is, the terminal may send its GNSS measurement capability to the network device when the terminal first connects to the wireless cellular network system, so that the network device may perform an appropriate operation based on the GNSS measurement capability of the terminal.

In some possible implementations, the network device may determine the GNSS measurement capability of the terminal based on a preamble sequence sent by the terminal during the initial access phase.

In some embodiments, the network device and the terminal may determine a mapping relationship between GNSS measurement capabilities and preamble sequences based on a protocol agreement. The terminal may then select and send the preamble sequence corresponding to the GNSS measurement capability of the terminal to the network device during the initial access phase. Thus, the network device may determine the GNSS measurement capability of the terminal based on the received preamble sequence.

In some embodiments, the network device may also send first information to the terminal, the first information being configured to indicate a mapping relationship between different GNSS measurement capabilities and preamble sequences. The terminal then selects and sends the preamble sequence corresponding to the GNSS measurement capability of the terminal to the network device during the initial access phase. The first information may be system information or any other information, which is not limited in this disclosure.

In some possible implementations, the network device may determine the GNSS measurement capability of the terminal based on a resource position used by the terminal for sending, during the initial access phase, the preamble sequence.

That is, different positions of preamble sequence transmission resources correspond to different GNSS measurement capabilities. Thus, the terminal may select, during the initial access phase, a resource position corresponding to the GNSS measurement capability of the terminal to send the preamble sequence, and the network device may determine the GNSS measurement capability of the terminal based on the position of the resource on which the preamble sequence is received.

In some embodiments, the network device and the terminal may each determine a mapping relationship between GNSS measurement capabilities and resource positions based on a protocol agreement. Then, during the initial access phase, a resource position corresponding to the GNSS measurement capability of the terminal is selected to send the preamble sequence to the network device.

In some embodiments, the network device may also send second information to the terminal to indicate a mapping relationship between GNSS measurement capabilities and resource positions. Then, during the initial access phase, a resource position corresponding to the GNSS measurement capability of the terminal is selected to send the preamble sequence to the network device. The second information may be system information or any other information, which is not limited in this disclosure.

In some possible implementations, the network device may determine the GNSS measurement capability of the terminal based on information carried in a third access message sent, during the initial access phase, by the terminal.

In some embodiments, the third access message received by the network device may carry first indication information for indicating the GNSS measurement capability or may carry GNSS measurement auxiliary information, so that the network device may determine the GNSS measurement capability of the terminal by parsing the third access message.

For a specific implementation of the first indication information and the GNSS measurement assistance information reference may be made to the detailed descriptions in any embodiment of this disclosure, and details are not repeated herein.

In some possible implementations, in the case that the terminal does not support the wireless cellular network system to operate simultaneously with the GNSS measurement, when the terminal is in the connected state, the terminal does not expect to receive, from the network device, any command/instruction for performing the GNSS measurement. Consequently, the network device may stop sending the command/instruction for triggering to perform the GNSS measurement to the terminal, when the terminal is in the connected state.

In some implementations, in the case that the terminal supports the wireless cellular network system to operate simultaneously with the GNSS measurement, the network device may send a trigger command/instruction to the terminal to trigger the terminal to perform, in the connected state, the GNSS measurement, when the terminal is in the connected state.

In summary, the network device receives the GNSS measurement capability sent by the terminal during an initial access phase. This enables the network device to timely and effectively perform appropriate operations based on the GNSS measurement capability of the terminal, such that it may ensure that the terminal promptly obtains its location information; thereby effectively reducing transmission delays and minimizing power consumption of the terminal. At the same time, more accurate uplink synchronization compensation information is obtained and interference on uplink transmissions between different terminals is prevented.

FIG. 7 is a flow chart illustrating a method for determining a GNSS measurement capability according to an embodiment of the disclosure. It should be noted that the method for determining a GNSS measurement capability in embodiments of the disclosure is performed by a network device. The method may be performed independently or may be performed in conjunction with any other embodiments of the disclosure. As shown in FIG. 7, the method may include the following.

At block 701, a GNSS measurement capability of a terminal sent by the terminal after the terminal enters into a connected state is received.

The GNSS measurement capability includes at least one of: whether the terminal supports a wireless cellular network system to operate simultaneously with a GNSS measurement, or a length of time required to obtain a GNSS measurement result.

In the disclosure, "the length of time required to obtain a GNSS measurement result" refers to the length of time required by the terminal to obtain the GNSS measurement result. In performing the GNSS measurement, a wireless cellular of the terminal may be in a connected state or in a disconnected state.

In some possible implementations, the network device may receive first indication information sent, after the terminal enters into the connected state, by the terminal. The network device may then determine the GNSS measurement capability of the terminal based on a value of a specified information field in the first indication information.

For the implementation of the first indication information reference may be made to the detailed descriptions in any embodiment of this disclosure, and details are not repeated herein.

In some possible implementations, the network device may also receive GNSS measurement assistance information sent, after the terminal enters into the connected state, by the terminal. The network device may then determine the GNSS measurement capability of the terminal based on an implicit indication of the GNSS measurement assistance information. For the specific manner in which the terminal indicates the GNSS measurement capability of the terminal via the GNSS measurement assistance information reference may be made to the detailed descriptions in any embodiment of this disclosure, and details are not repeated herein.

In some possible implementations, the GNSS measurement capability received by the network device from the terminal may be the GNSS measurement capability sent, based on a GNSS measurement period, by the terminal to the network device.

That is, the terminal may report the GNSS measurement capability to the network device to the network device once before each GNSS measurement window arrives or after each GNSS measurement is completed. It should be noted that the GNSS measurement capability of the terminal may be fixed or variable, which is not limited in this disclosure.

In some embodiments, the GNSS measurement capability received by the network device from the terminal may also be sent, based on a trigger command/instruction from the network device, by the terminal to the network device.

That is, after determining that the terminal enters into the connected state, the network device may send the trigger command/instruction to the terminal to trigger the terminal to send the GNSS measurement capability of the terminal to the network device.

In some possible implementations, in the case that the terminal does not support the wireless cellular network system to operate simultaneously with the GNSS measurement, when the terminal is in the connected state, the terminal does not expect to receive, from the network device, any command/instruction for performing the GNSS measurement. Consequently, the network device may stop sending, to the terminal, a command/instruction for triggering to perform the GNSS measurement, when the terminal is in the connected state.

In some possible implementations, in the case that the terminal supports the wireless cellular network system to operate simultaneously with the GNSS measurement, the network device may send a trigger command/instruction to the terminal, to trigger the terminal to perform the GNSS measurement in the connected state, when the terminal is in the connected state.

In summary, the network device may receive the GNSS measurement capability of the terminal sent, in the connected state, by the terminal. This enables the network device to timely and effectively perform appropriate operations based on the GNSS measurement capability of the terminal, such that it may ensure that the terminal promptly obtains its location information; thereby effectively reducing transmission delays and minimizing power consumption of the terminal. At the same time, more accurate uplink synchronization compensation information is obtained and interference on uplink transmissions between different terminals is prevented.

Corresponding to the methods for determining a GNSS measurement capability according to the above embodiments, the disclosure further provides apparatuses for determining a GNSS measurement capability. Since the apparatuses for determining a GNSS measurement capability according to embodiments of the disclosure correspond to the methods according to the above embodiments, the implementations of the methods for determining a GNSS measurement capability are also applicable to the apparatuses for determining a GNSS measurement capability in the following embodiments, which will not be described in detail in the following embodiments.

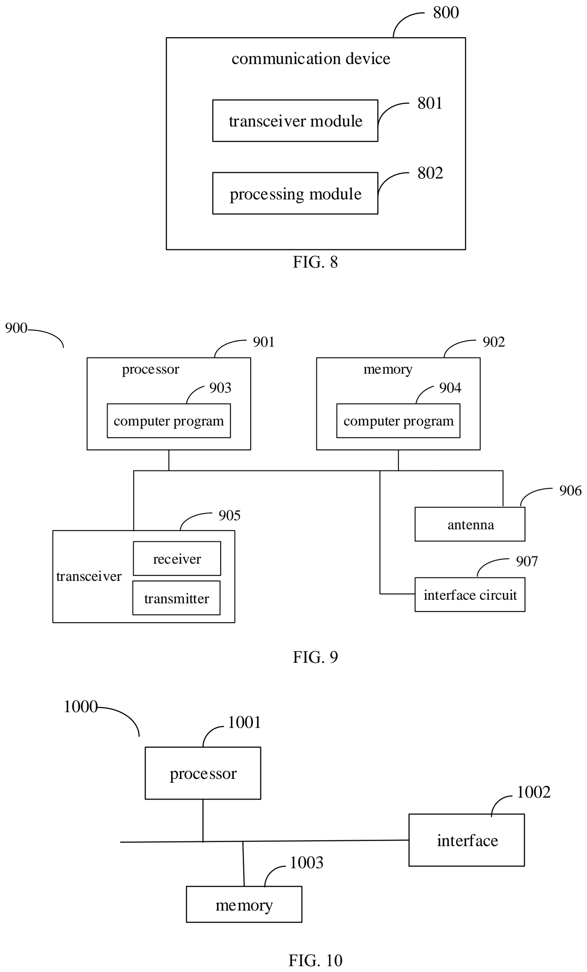

FIG. 8 is a block diagram illustrating a communication device according to an embodiment of the disclosure. The communication device 800 illustrated in FIG. 8 may include a transceiver module 801 and a processing module 802. The transceiver module 801 may include a transmitting module and/or a receiving module. The transmitting module is configured for realizing a transmitting function, and the receiving module is configured for realizing a receiving function. The transceiver module 801 may realize the transmitting function and/or the receiving function.

It may be understood that the communication device 800 may be a terminal, a device in a terminal, or a device that is capable of being used in conjunction with a terminal.

When the communication device 800 is on a terminal side, the transceiver module 801 is configured to send a GNSS measurement capability of the terminal to a network device, in which the GNSS measurement capability includes at least one of: whether the terminal supports a wireless cellular network system to operate simultaneously with a GNSS measurement, or a length of time required to obtain a GNSS measurement result.

In some embodiments, the transceiver module 801 is further configured to send first indication information to the network device, the first indication information being configured to indicate the GNSS measurement capability of the terminal, or send GNSS measurement assistance information of the terminal to the network device, the GNSS measurement assistance information being configured to indicate the GNSS measurement capability of the terminal.

In some embodiments, the GNSS measurement assistance information includes at least one of: the length of time required to obtain the GNSS measurement result; or a validity duration of the GNSS measurement result.

In some embodiments, the processing module 802 is further configured to, in a case that the terminal does not support the wireless cellular network system to operate simultaneously with the GNSS measurement, set the length of time required to obtain the GNSS measurement result in the GNSS measurement assistance information as a specified value.

In some embodiments, the transceiver module 801 is further configured to send the GNSS measurement capability of the terminal to the network device during an initial access phase; or send the GNSS measurement capability of the terminal to the network device after entering into a connected state.

In some embodiments, the transceiver module 801 is further configured to send a preamble sequence corresponding to the GNSS measurement capability to the network device during the initial access phase; send a preamble sequence to the network device using a resource position corresponding to the GNSS measurement capability during the initial access phase; or send the GNSS measurement capability to the network device via a third access message.

In some embodiments, the processing module 802 is further configured to determine a mapping relationship between GNSS measurement capabilities and preamble sequences based on a protocol agreement; determine a mapping relationship between GNSS measurement capabilities and preamble sequences based on first information sent by the network device; determine a mapping relationship between GNSS measurement capabilities and resource positions based on a protocol agreement; or determine a mapping relationship between GNSS measurement capabilities and resource positions based on second information sent by the network device.

In some embodiments, the transceiver module 801 is further configured to send the GNSS measurement capability to the network device based on a GNSS measurement period or send the GNSS measurement capability to the network device based on a trigger command/instruction from the network device.

In some embodiments, the processing module 802 is further configured to, in a case that the terminal does not support the wireless cellular network system to operate simultaneously with the GNSS measurement, stop monitoring a command/instruction, sent by the network device, for triggering to perform the GNSS measurement, when the terminal is in a connected state; or in a case that the terminal supports the wireless cellular network system to operate simultaneously with the GNSS measurement, perform the GNSS measurement, by the terminal in a connected state, based on a trigger or a configuration.

In summary, the terminal sends directly, to the network device, the GNSS measurement capability of the terminal on whether the terminal supports the wireless cellular network system to operate simultaneously with the GNSS measurement or the length of time required to obtain the GNSS measurement result. This enables the network device to timely and effectively perform appropriate operations based on the GNSS measurement capability of the terminal, such that it may ensure that the terminal promptly obtains its location information; thereby effectively reducing transmission delays and minimizing power consumption of the terminal. At the same time, more accurate uplink synchronization compensation information is obtained and interference on uplink transmissions between different terminals is prevented.

In some embodiments, the communication device 800 may be a network device, a device in a network device, or a device that is capable of being used in conjunction with a network device.

When the communication device 800 is on a network device side, the transceiver module 801 is configured to receive a GNSS measurement capability from a terminal, in which the GNSS measurement capability includes at least one of: whether the terminal supports a wireless cellular network system to operate simultaneously with a GNSS measurement, or a length of time required to obtain a GNSS measurement result.

In some embodiments, the transceiver module 801 is further configured to receive first indication information sent by the terminal, the first indication information being configured to indicate the GNSS measurement capability of the terminal; or receive GNSS measurement assistance information of the terminal sent by the terminal, the GNSS measurement assistance information being configured to indicate the GNSS measurement capability of the terminal.

In some embodiments, the GNSS measurement assistance information includes at least one of: the length of time required to obtain the GNSS measurement result; or a validity duration of the GNSS measurement result.

In some embodiments, the processing module 802 is further configured to, in a case that the length of time required to obtain the GNSS measurement result in the GNSS measurement assistance information is a specified value, determine that the terminal does not support the wireless cellular network system to operate simultaneously with the GNSS measurement.

In some embodiments, the transceiver module 801 is further configured to receive the GNSS measurement capability of the terminal sent, during an initial access phase, by the terminal; or receive the GNSS measurement capability of the terminal sent, after the terminal enters into a connected state, by the terminal.

In some embodiments, the transceiver module 801 is further configured to determine the GNSS measurement capability of the terminal based on a preamble sequence sent, during the initial access phase, by the terminal; determine the GNSS measurement capability of the terminal based on a resource position used by the terminal for sending, during the initial access phase, the preamble sequence; or determine the GNSS measurement capability of the terminal based on information carried in a third access message sent, during the initial access phase, by the terminal.

In some embodiments, the processing module 802 is further configured to determine a mapping relationship between GNSS measurement capabilities and preamble sequences based on a protocol agreement; send first information to the terminal, the first information being configured to indicate a mapping relationship between different GNSS measurement capabilities and preamble sequences; determine a mapping relationship between GNSS measurement capabilities and resource positions based on a protocol agreement; or send second information to the terminal, the second information being configured to indicate a mapping relationship between GNSS measurement capabilities and resource positions.

In some embodiments, the transceiver module 801 is further configured to receive the GNSS measurement capability sent, based on a GNSS measurement period, by the terminal, or receive the GNSS measurement capability sent, based on a trigger command/instruction from the network device, by the terminal.

In summary, the network device receives, from the terminal, the GNSS measurement capability on whether the terminal supports the wireless cellular network system to operate simultaneously with the GNSS measurement or the length of time required to obtain the GNSS measurement result. This enables the network device to timely and effectively perform appropriate operations based on the GNSS measurement capability of the terminal, such that it may ensure that the terminal promptly obtains its location information; thereby effectively reducing transmission delays and minimizing power consumption of the terminal. At the same time, more accurate uplink synchronization compensation information is obtained and interference on uplink transmissions between different terminals is prevented.

FIG. 9 is a block diagram illustrating another communication device according to an embodiment of the disclosure. The communication device 900 may be a terminal, or a system on chip or a processor that supports the terminal to implement the method; alternatively, the communication device 900 may be a network device, or a chip, a system on chip or a processor that supports the network device to implement the method. The device may be used to realize the methods described in the above method embodiments with reference to the descriptions of the above-described method embodiments.

The communication device 900 may include one or more processors 901. The processor 901 may be a general purpose processor or a dedicated processor. For example, the processor 901 may be a baseband processor or a central processor. The baseband processor may be configured to process a communication protocol and communication data, and the central processor may be configured to control a communication device (e.g., a base station, a baseband chip, a terminal, a terminal chip, a DU or CU, etc.), to execute a computer program, and process data of the computer program.

In some embodiments, the communication device 900 may further include one or more memories 902 with a computer program 904 stored thereon. The memory 902 executes the computer program 904 so that the communication device 900 performs the methods as described in the above method embodiments. In some examples, the memory 902 may further store data. The communication device 900 and the memory 902 may be independently configured or integrated together.

In some embodiments, the communication device 900 may further include a transceiver 905 and an antenna 906. The transceiver 905 may be referred to as a transceiver unit, a transceiver machine or a transceiver circuit, which may be configured to achieve transmitting and receiving functions. The transceiver 905 may include a receiver and a transmitter. The receiver may be referred to as a receiver machine or a receiving circuit, etc., for implementing a receiving function. The transmitter may be referred to as a transmitter machine or a transmitting circuit, etc. for implementing a transmitting function.

In some embodiments, the communication device 900 may further include one or more interface circuits 907. The interface circuit 907 is configured to receive code instructions and transmit the code instructions to the processor 901. The processor 901 runs the code instructions so that the communication device 900 performs the methods according to the above method embodiments.

The transceiver 905 in the communication device 900 may be configured to perform the transmitting and receiving steps in the above-described figures, and the processor 901 in the communication device 900 may be configured to perform the processing steps in the above-described figures.

In an implementation, the processor 901 may include a transceiver configured to implement receiving and transmitting functions. For example, the transceiver may be a transceiver circuit, an interface, or an interface circuit. The transceiver circuit, the interface or the interface circuit configured to implement receiving and transmitting functions may be separate or integrated together. The transceiver circuit, the interface or the interface circuit may be configured to read and write codes/data, or the transceiver circuit, the interface or the interface circuit may be configured to transmit or deliver a signal.

In an implementation, the processor 901 may be stored with a computer program 903. The computer program 903 runs on the processor 901 so that the communication device 900 performs the methods as described in the above method embodiments. The computer program 903 may be solidified in the processor 901, in which case the processor 901 may be implemented by hardware.

In an implementation, the communication device 900 may include a circuit that may implement the transmitting or receiving or communication function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may further be fabricated by using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe) and gallium arsenide (GaAs).

The communication device described in the above embodiments may be a network device or an intelligent relay, but the scope of the communication device described in the disclosure is not limited thereto, and a structure of the communication device may not be limited to FIG. 9. The communication device may be a stand-alone device or may be a part of a larger device. For example, the communication device may be:
(1) a stand-alone integrated circuit (IC), or a chip, or a system on chip or a subsystem;
(2) a set of one or more ICs, for example, which may include a storage component for storing data and a computer program;
(3) an ASIC, such as a Modem;
(4) a module that may be embedded within other devices;
(5) a receiver, a terminal, a smart terminal, a cellular phone, a wireless device, a handset, a mobile unit, a vehicle device, a network device, a cloud device, an artificial intelligence device, etc.; and
(6) others, and so forth.

In the case that the communication device may be a chip or a chip system, please refer to FIG. 10. FIG. 10 is a block diagram illustrating a chip 900 according to an embodiment of the disclosure. The chip illustrated in FIG. 10 includes a processor 1001 and an interface 1002, in which the number of processors 1001 may be one or more and the number of interfaces 1002 may be more than one.

In a case, the chip is used to implement the functionality of the terminal in embodiments of the disclosure.

In some embodiments, the chip 190 further includes a memory 1003, configured to save necessary computer programs and data.

Those skilled in the related art may understand that various illustrative logical blocks and steps listed in embodiments of the disclosure, may be implemented by electronic hardware, computer software or a combination of electronic hardware and computer software. Whether the function is implemented by hardware or software depends on specific applications and design requirements for an overall system. Those skilled in the art may implement the functions by using various methods for each specific application, but such an implementation should not be understood as beyond the protection scope of embodiments of the disclosure.

A readable storage medium with instructions stored thereon is further provided in the disclosure. When the instructions are executed by a computer, functions of any method embodiment are implemented.

A computer program product is further provided in the disclosure. The computer program product implements functions of any method embodiment when executed by a processor.

In the above embodiments, the functions may be wholly or partially implemented by software, hardware, firmware, or any combination thereof. When implemented by software, the functions may be implemented in whole or in part in the form of a computer program product. The computer program product includes one or more computer programs. Procedures or functions according to embodiments of the disclosure are wholly or partially generated when the computer program is loaded and executed on a computer. The computer may be a general-purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another via wire (such as a coaxial cable, a fiber optic, a digital subscriber line (DSL)) or wireless (such as infrared, wireless, microwave). The computer-readable storage medium may be any available medium that may be accessed by a computer or a data storage device such as a server that integrates one or more of the available media, and a data center. The readable medium may be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in disclosure are used to distinguish features merely for convenience of description and are not intended to limit the scope of the embodiments of the disclosure. Further, they are also used to indicate an order of precedence.

At least one in the disclosure may also be described as one or more, and a plurality of may be two, three, four or more, which is not limited in the disclosure. In embodiments of the disclosure, for a kind of technical feature, technical features in the kind of technical feature are distinguished by "first", "second", "third", "A", "B", "C" and "D", and there is no order of precedence or magnitude between technical features described in "first", "second", "third", "A", "B", "C" and "D".

Corresponding relationships indicated by tables in the disclosure may be configured or predefined. Values of information in tables are only examples, and may be configured as other values, which are not limited in the disclosure. When corresponding relationships between information and parameters are configured, it is not always necessary to configure all corresponding relationships indicated in tables. For example, in the tables in the disclosure, corresponding relationships indicated by some rows may not be configured. For another example, appropriate transformations and adjustments, such as splitting and merging, may be made based on the above tables. Names of parameters shown in headers in the tables may be other names understandable by the communication device, and values or representations of the parameters may be other values or representations understandable by the communication device. When the above tables are implemented, other data structures may be used, and for example, arrays, queues, containers, stacks, linear lists, pointers, linked lists, trees, graphs, structures, classes, heaps or hash tables may be used.

Predefined in the disclosure may be understood as defined, predefined, stored, prestored, pre-negotiated, pre-configured, solidified or pre-fired.

Those skilled in the related art may realize that, in combination with units and algorithm steps of the examples described in embodiments of the disclosure, may be implemented by electronic hardware or a combination of electronic hardware and computer software. Whether the functions are executed by hardware or software depends on a specific application and a design constraint of the technical solution. Those skilled in the art may adopt different methods for each specific application to implement the described functions, but such implementation should not be considered beyond the scope of the disclosure.

Those skilled in the art may clearly understand that, for a specific working process of a system, an apparatus and a unit described above reference may be made to a corresponding process in the above method embodiments, and details will not be repeated here.

The above are only implementations of the disclosure. However, the protection scope of the disclosure is not limited here. Changes and substitutions that may be easily considered by those skilled in the art shall be contained within the protection scope of the disclosure. Therefore, the protection scope of the disclosure shall be subject to the protection scope of claims.

## Claims

1. A method for determining a global navigation satellite system (GNSS) measurement capability, performed by a terminal, comprising:
sending a GNSS measurement capability of the terminal to a network device, wherein the GNSS measurement capability comprises at least one of: whether the terminal supports a wireless cellular network system to operate simultaneously with a GNSS measurement, or a length of time required to obtain a GNSS measurement result.

2. The method according to claim 1, wherein sending the GNSS measurement capability of the terminal to the network device comprises:
sending first indication information to the network device, the first indication information being configured to indicate the GNSS measurement capability of the terminal; or
sending GNSS measurement assistance information of the terminal to the network device, the GNSS measurement assistance information being configured to indicate the GNSS measurement capability of the terminal.

3. The method according to claim 2, wherein the GNSS measurement assistance information comprises at least one of:
the length of time required to obtain the GNSS measurement result; or
a validity duration of the GNSS measurement result.

4. The method according to claim 3, further comprising:
in a case that the terminal does not support the wireless cellular network system to operate simultaneously with the GNSS measurement, setting the length of time required to obtain the GNSS measurement result in the GNSS measurement assistance information as a specified value.

5. The method according to claim 1, wherein sending the GNSS measurement capability of the terminal to the network device comprises:
sending the GNSS measurement capability of the terminal to the network device during an initial access phase; or
sending the GNSS measurement capability of the terminal to the network device after entering into a connected state.

6. The method according to claim 5, wherein sending the GNSS measurement capability of the terminal to the network device during the initial access phase comprises one of:
sending a preamble sequence corresponding to the GNSS measurement capability to the network device during the initial access phase;
sending a preamble sequence to the network device using a resource position corresponding to the GNSS measurement capability during the initial access phase; or
sending the GNSS measurement capability to the network device via a third access message.

7. The method according to claim 6, further comprising one of:
determining a mapping relationship between GNSS measurement capabilities and preamble sequences based on a protocol agreement;
determining a mapping relationship between GNSS measurement capabilities and preamble sequences based on first information sent by the network device;
determining a mapping relationship between GNSS measurement capabilities and resource positions based on a protocol agreement; or
determining a mapping relationship between GNSS measurement capabilities and resource positions based on second information sent by the network device.

8. The method according to claim 5, wherein sending the GNSS measurement capability of the terminal to the network device after entering into the connected state comprises:
sending the GNSS measurement capability to the network device based on a GNSS measurement period; or
sending the GNSS measurement capability to the network device based on a trigger instruction from the network device.

9. The method according to any one of claims 1 to 8, further comprising:
in a case that the terminal does not support the wireless cellular network system to operate simultaneously with the GNSS measurement, stopping monitoring an instruction, sent by the network device, for triggering to perform the GNSS measurement, in response to the terminal being in a connected state; or
in a case that the terminal supports the wireless cellular network system to operate simultaneously with the GNSS measurement, performing the GNSS measurement, by the terminal in a connected state, based on a trigger or a configuration.

10. A method for determining a global navigation satellite system (GNSS) measurement capability, performed by a network device, comprising:
receiving a GNSS measurement capability sent by a terminal, wherein the GNSS measurement capability comprises at least one of: whether the terminal supports a wireless cellular network system to operate simultaneously with a GNSS measurement, or a length of time required to obtain a GNSS measurement result.

11. The method according to claim 10, wherein receiving the GNSS measurement capability sent by the terminal comprises:
receiving first indication information sent by the terminal, the first indication information being configured to indicate the GNSS measurement capability of the terminal; or
receiving GNSS measurement assistance information of the terminal sent by the terminal, the GNSS measurement assistance information being configured to indicate the GNSS measurement capability of the terminal.

12. The method according to claim 11, wherein the GNSS measurement assistance information comprises at least one of:
the length of time required to obtain the GNSS measurement result; or
a validity duration of the GNSS measurement result.

13. The method according to claim 12, further comprising:
in a case that the length of time required to obtain the GNSS measurement result in the GNSS measurement assistance information is a specified value, determining that the terminal does not support the wireless cellular network system to operate simultaneously with the GNSS measurement.

14. The method according to claim 10, wherein receiving the GNSS measurement capability sent by the terminal comprises:
receiving the GNSS measurement capability of the terminal sent, during an initial access phase, by the terminal; or
receiving the GNSS measurement capability of the terminal sent, after the terminal enters into a connected state, by the terminal.

15. The method according to claim 14, wherein receiving the GNSS measurement capability of the terminal sent, during the initial access phase, by the terminal comprises one of:
determining the GNSS measurement capability of the terminal based on a preamble sequence sent, during the initial access phase, by the terminal;
determining the GNSS measurement capability of the terminal based on a resource position used by the terminal for sending, during the initial access phase, the preamble sequence; or
determining the GNSS measurement capability of the terminal based on information carried in a third access message sent, during the initial access phase, by the terminal.

16. The method according to claim 14, further comprising one of:
determining a mapping relationship between GNSS measurement capabilities and preamble sequences based on a protocol agreement;
sending first information to the terminal, the first information being configured to indicate a mapping relationship between different GNSS measurement capabilities and preamble sequences;
determining a mapping relationship between GNSS measurement capabilities and resource positions based on a protocol agreement; or
sending second information to the terminal, the second information being configured to indicate a mapping relationship between GNSS measurement capabilities and resource positions.

17. The method according to claim 14, wherein receiving the GNSS measurement capability of the terminal sent, after the terminal enters into the connected state, by the terminal comprises:
receiving the GNSS measurement capability sent, based on a GNSS measurement period, by the terminal; or
receiving the GNSS measurement capability sent, based on a trigger instruction from the network device, by the terminal.

18. A terminal, comprising:
a transceiver module, configured to send a GNSS measurement capability of the terminal to a network device, wherein the GNSS measurement capability comprises at least one of: whether the terminal supports a wireless cellular network system to operate simultaneously with a GNSS measurement, or a length of time required to obtain a GNSS measurement result.

19. A network device, comprising:
a transceiver module, configured to receive a GNSS measurement capability from a terminal, wherein the GNSS measurement capability comprises at least one of: whether the terminal supports a wireless cellular network system to operate simultaneously with a GNSS measurement, or a length of time required to obtain a GNSS measurement result.

20. A communication device, comprising a processor and a memory, wherein the memory stores a computer program, which, when executed by the processor, causes the device to implement the method according to any one of claims 1 to 9 or implement the method according to any one of claims 10 to 17.

21. A communication device, comprising: a processor and an interface circuit; wherein
the interface circuit is configured to receive code instructions and transmit the code instructions to the processor; and
the processor is configured to execute the code instructions to implement the method according to any one of claims 1 to 9 or implement the method according to any one of claims 10 to 17.

22. A communication system, comprising: a terminal and a network device; wherein
the terminal is configured to implement the method according to any one of claims 1 to 9; and
the network device is configured to implement the method according to any one of claims 10 to 17.

23. A computer-readable storage medium, configured to store instructions, wherein when the instructions are executed, the method according to any one of claims 1 to 9 or the method according to any one of claims 10 to 17 is implemented.
